# FASCICULE DE BREVET EUROPEEN

(11) **EP 1 496 663 B1**
(45) Date de publication et mention de la délivrance du brevet: **19.04.2006**
(21) Numéro de dépôt: 04015110.2
(22) Date de dépôt: 28.06.2004
(51) Int. Cl.: H04L 29/06, H04L 9/32

(54) **Procédé et système de signature électronique de document**
Verfahren und Vorrichtung zur elektronischen Signierung eines Dokuments
Method and system for electronically signing a document

(30) Priorité: 07.07.2003 FR 0308293
(43) Date de publication de la demande: 12.01.2005
(73) Titulaire: FRANCE TELECOM, 75015 Paris (FR)
(72) Inventeur: Boudet, François, 14320 Fontenay Le Marmion (FR)

(56) Documents cités:
- WO-A-01/73709
- WO-A-02/093405

## Description

La présente invention concerne un procédé de signature électronique de document, tel qu'en particulier un constat amiable d'accident.

WO02093405 décrit une méthode pour transférer une message électronique via un serveur qui ajoute des attributs au message, qui peuvent être en rapport avec la sécurité.

Dans le document WO 01/95071, il est décrit un procédé et un système de signature électronique depuis un terminal mobile, tel qu'en particulier un téléphone mobile. Plus précisément, le téléphone mobile signe électroniquement un document haché qu'il reçoit en provenance d'un ordinateur personnel (PC), l'utilisateur du téléphone mobile ayant la faculté de visualiser en clair ledit document sur l'ordinateur. Pour produire une telle signature, l'utilisateur saisit un code sur le clavier de son téléphone, la signature étant alors transmise à l'ordinateur par un canal de communication courte distance du type câble série, liaison infrarouge ou Bluetooth.

L'inconvénient d'un tel procédé réside dans le fait que:
- l'ordinateur comporte nécessairement un module de hachage du document de façon à transmettre au téléphone mobile le hachage du document,
- l'utilisateur n'a pas la possibilité d'intervenir dans l'établissement du document et doit nécessairement se trouver à proximité de l'ordinateur personnel pour pouvoir visualiser le texte au moment de la signature,
- le canal de communication entre l'ordinateur et le téléphone mobile doit impérativement être sécurisé.

Par ailleurs, on constate qu'à l'heure actuelle, la circulation automobile, de plus en plus dense, génère un nombre important d'accidents de la circulation. Pour les accidents sans victime, et pour en faciliter le traitement, les sociétés d'assurance automobile, ont, par l'intermédiaire de leurs organismes de tutelle comme le Comité Européen des Assurances, instauré le Constat Européen d'Accident.

Ce constat comporte un certain nombre de rubriques à remplir par le ou les conducteurs impliqués. Il ne constitue pas une reconnaissance de responsabilités, mais seulement un relevé des identités et des faits servant à l'accélération du règlement des dommages subis par les véhicules.

Le recto du constat doit être obligatoirement signé par le ou les conducteurs impliqués, puis transmis avec la déclaration d'accident (verso) par le ou chaque assuré à sa compagnie d'assurance. A partir de règles communes aux sociétés d'assurance, le constat permet à celles-ci de définir les responsabilités et d'assurer le traitement des dossiers.

Quelques sociétés d'assurance proposent d'effectuer des déclarations d'accident en ligne par Internet, après authentification par "login" et mot de passe. Le problème réside dans le fait que ce type d'authentification ne répond pas aux critères de signatures électroniques, définis par la loi, qui imposent que la signature prenne en compte l'objet signé.

Aussi, le problème technique à résoudre par l'objet de la présente invention est de proposer un procédé et un système de signature électronique d'un document, tel que notamment le constat amiable d'accident mentionné ci-dessus, qui puissent s'effectuer de façon rapide, ergonomique, tout en autorisant la sécurisation des échanges.

A cet effet, le procédé selon l'invention comprend les étapes suivantes:
- a) connexion du premier terminal auprès d'un serveur d'établissement de document électronique,
- b) envoi par le serveur à ce terminal d'une requête de saisie de données qui sont relatives, d'une part, à l'identification de l'utilisateur du premier terminal, et, d'autre part, à un événement lié au moins à cet utilisateur,
- c) saisie desdites données sur le premier terminal et envoi desdites données vers le serveur,
- d) établissement d'un document électronique à partir des données reçues et envoi par le serveur à des moyens de gestion de signature électronique dudit document établi, accompagné d'un numéro d'identification du premier terminal,
- e) envoi par les moyens de gestion de signature électronique au premier terminal dudit document établi reçu, accompagné d'une requête de signature dudit document,
- f) calcul d'une signature électronique par le premier terminal en réponse à ladite requête et envoi du document signé aux moyens de gestion de signature électronique,
- g) vérification, par lesdits moyens de gestion de signature électronique, de la signature associée au document signé reçu.

Dans un mode de réalisation préféré du procédé selon l'invention, on a recours à l'une ou l'autre des dispositions suivantes :
- lorsqu'un second terminal mobile est impliqué :
   - à l'étape b) les données envoyées vers le premier terminal sont relatives, d'une part, à l'identification des utilisateurs de chacun des premier et second terminaux, et, d'autre part, à un événement liant ces utilisateurs,
   - à l'étape d) le document électronique établi qui est envoyé vers les moyens de gestion de signature électronique est accompagné d'un numéro d'identification pour chacun des premier et second terminaux,
   - à l'étape e) le document établi reçu est envoyé vers les premier et second terminaux, en étant accompagné d'une requête de signature dudit document,
   - à l'étape f), la signature électronique est effectuée par chacun des premier et second terminaux en réponse à ladite requête et le document signé est envoyé par chacun des premier et second terminaux aux moyens de gestion de signature électronique,
   - à l'étape g), la signature vérifiée est associée à chaque document signé reçu;
      - l'étape b) comprend l'envoi d'une requête par le serveur d'établissement de document électronique à des moyens de gestion de données d'identification, afin de recevoir des données complémentaires relatives à l'identification du ou des utilisateurs;
      - à la suite de l'étape g), le procédé comprend la transmission du ou des documents signés reçus aux moyens de gestion de données d'identification, par les moyens de gestion de signature électronique, via le serveur d'établissement de document électronique.

La présente invention concerne également un système de signature de document électronique.

Ce système a également pour but de remédier aux inconvénients précités.

A cet effet, un système selon l'invention comprend :
- au moins un premier terminal mobile qui comprend des moyens d'envoi/réception de données, des moyens d'affichage, des moyens de saisie de données qui sont relatives, d'une part, à l'identification de l'utilisateur du premier terminal, et, d'autre part, à un événement lié au moins à cet utilisateur, et des moyens de calcul de signature électronique,
- un serveur d'établissement de document électronique qui comprend des moyens d'envoi/réception de données pour envoyer audit premier terminal une requête de saisie de données qui sont relatives, d'une part, à l'identification de l'utilisateur du premier terminal, et, d'autre part, à un événement lié au moins à cet utilisateur, et des moyens d'établissement de document électronique à partir des données reçues,
- des moyens de gestion de signature électronique comprenant des moyens d'envoi/réception de données qui sont destinés :
   - à recevoir, en provenance du serveur d'établissement de document électronique, ledit document établi, accompagné d'un numéro d'identification du premier terminal,
   - à envoyer au premier terminal ledit document établi reçu, accompagné d'une requête de signature dudit document,
   - à recevoir le document signé en provenance dudit premier terminal,
   et des moyens de vérification pour vérifier la signature associée au document signé reçu.

Un autre système selon l'invention comprend :
- des premier et second terminaux mobiles qui comprennent chacun des moyens d'envoi/réception de données, des moyens d'affichage, des moyens de saisie de données et des moyens de calcul de signature électronique, les moyens de saisie de données du premier terminal étant destinés à saisir des données qui sont relatives, d'une part, à l'identification des utilisateurs de chacun des premier et second terminaux, et, d'autre part, à un événement liant ces utilisateurs,
- un serveur d'établissement de document électronique qui comprend des moyens d'envoi/réception de données pour envoyer audit premier terminal une requête de saisie de données qui sont relatives, d'une part, à l'identification des utilisateurs de chacun des premier et second terminaux, et, d'autre part, à un événement liant ces utilisateurs, et des moyens d'établissement de document électronique à partir des données reçues,
- des moyens de gestion de signature électronique comprenant des moyens d'envoi/réception de données qui sont destinés :
   - à recevoir, en provenance du serveur d'établissement de document électronique, ledit document établi, accompagné d'un numéro d'identification pour chacun des premier et second terminaux,
   - à envoyer aux premier et second terminaux ledit document établi reçu, accompagné d'une requête de signature dudit document,
   - à recevoir le document signé en provenance des premier et second terminaux,
et des moyens de vérification pour vérifier la signature associée à chaque document signé reçu.

Dans un mode de réalisation préféré du système selon l'invention, on a recours à l'une et/ou à l'autre des dispositions suivantes :
- il est prévu en outre des moyens de gestion de données d'identification qui comprennent :
   - des moyens d'émission/réception de données pour, d'une part, envoyer au serveur d'établissement de document électronique des données complémentaires relatives à l'identification du premier utilisateur, et, d'autre part, recevoir, en provenance des moyens de gestion de signature électronique, le document signé reçu,
   - des moyens de traitement du document signé reçu qui sont reliés aux moyens d'émission/réception,
   - et des moyens de stockage de données d'identification du ou desutilisateurs qui sont reliés auxdits moyens de traitement,
   - les premier et second terminaux mobiles sont des téléphones, leurs moyens de calcul de signature électronique respectifs étant contenus dans un module électronique d'authentification.

D'autres caractéristiques et avantages de l'invention apparaîtront au cours de la description suivante d'un mode de réalisation, donné à titre d'exemple non limitatif, en regard des dessins annexés.

Sur les dessins :
- la figure 1 représente l'architecture générale du système de signature électronique selon la présente invention,
- la figure 2 représente un schéma fonctionnel d'une carte SIM pouvant être utilisée pour réaliser la signature électronique.

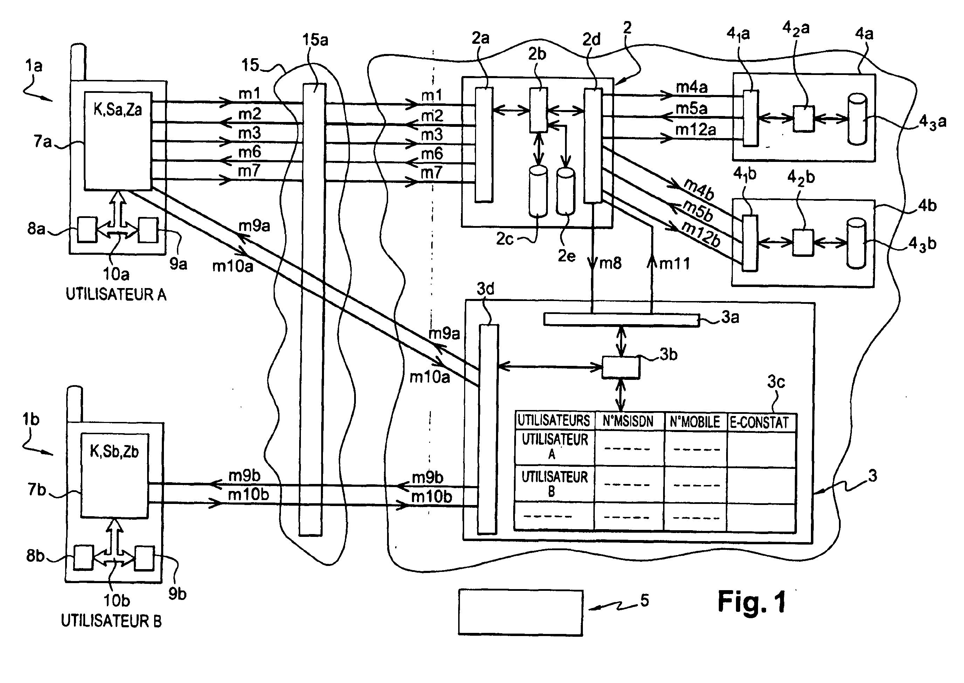

Comme on peut le voir sur la figure 1, le système selon la présente invention comprend :
- un premier terminal mobile 1a appartenant à un utilisateur A,
- un second terminal mobile 1 b appartenant à un utilisateur B,
- un serveur d'établissement de documents 2,
- une plate-forme de gestion de signature électronique 3,
- un serveur 4a de gestion de données d'identification de l'utilisateur A et un serveur 4b de gestion de données d'identification de l'utilisateur B,
- une autorité de confiance 5,
- un réseau de communication 15 qui permet l'échange de données entre:
   - l'un des terminaux mobiles 1 a, 1 b et le serveur 2,
   - les terminaux mobiles 1 a, 1 b et la plate-forme 3,
   - le serveur 2 et la plate-forme 3,
   - le serveur 2 et les serveurs 4a et 4b.

Dans le mode de réalisation représenté, le système est particulièrement appliqué à la signature électronique de constat européen d'accident.

Une telle signature électronique repose de préférence sur une infrastructure à clé publique (PKI pour *Public Key Infrastructure*) connue en tant que telle.

Dans l'exemple représenté, les terminaux mobiles 1a et 1b sont des téléphones mobiles classiques, par exemple de type GSM.

Ils comprennent chacun :
- un module d'authentification 7a, 7b, tel que par exemple une carte SIM (Subscriber Identity Module),
- un clavier 8a, 8b,
- un écran 9a, 9b,
- un bus 10a, 10b reliant les modules précités.

D'une façon classique, les cartes SIM 7a, 7b sont conçues pour émettre et recevoir des messages courts ("short messages") ou SM grâce à une application logicielle nommée "Sim Application Toolkit" qui est programmée dans ces dernières.

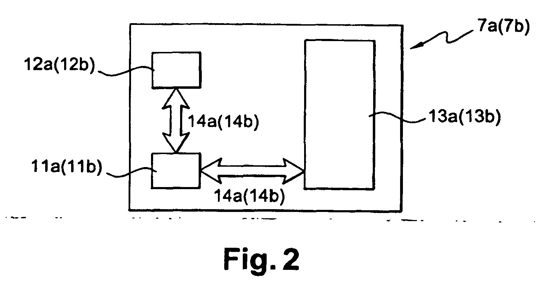

En référence à la figure 2, chaque carte SIM 7a, 7b comprend :
- un microprocesseur 11 a, 11 b qui assure la gestion des fonctions et l'exécution de programmes applicatifs de la carte,
- une mémoire rémanente 12a, 12b de type par exemple EEPROM (de l'anglais « electrically erasable programmable read-only memory »),
- une interface de communication 13a, 13b par laquelle chaque carte 7a, 7b échange des données avec l'environnement extérieur,
- un bus interne 14a, 14b qui relie les modules précités.

Plus particulièrement dans le mode de réalisation représenté, chaque carte SIM 7a, 7b comporte une application logicielle destinée à produire et émettre une signature électronique. A cet effet, sont enregistrées préalablement dans la mémoire 12a (respectivement 12b) de la carte SIM 7a (respectivement 7b) :
- une paire de clés publique K et privée Sa (respectivement Sb),
- toutes les informations nécessaires au chiffrement à l'aide de l'algorithme à clé publique précité.

La clé publique K, de même que toutes les informations nécessaires à la mise en oeuvre de l'algorithme de chiffrement, sont également enregistrées préalablement dans la plate-forme 3.

Par ailleurs, lors de l'inscription au système, chaque utilisateur A et B communique à la plate-forme 3 son nom, son numéro de téléphone mobile et le numéro MSISDN associé que la plate-forme enregistre dans une table de correspondance 3c ou analogue.

En référence à nouveau à la figure 1, les serveurs 4a et 4b sont, compte tenu du contexte, les serveurs d'assurance des utilisateurs A et B respectivement. Chaque serveur 4a, 4b comprend :
- une interface de communication 4₁a, 4₁b avec un réseau de type Internet,
- un serveur d'application 4₂a, 4₂b relié à l'interface 4₁a, 4₁b et destiné à traiter les constats sous forme électronique,
- une base de données clients 4₃a, 4₃b dans laquelle sont enregistrées des informations d'identification des conducteurs et de leur(s) véhicule(s) respectif(s),

L'un des téléphones mobiles, par exemple le téléphone 1a, communique avec le serveur 2 par un réseau de communication mobile tel que par exemple le réseau GSM 15, lequel comprend une centrale de messages (« Short Message ») 15a qui est destinée, de façon connue en tant que telle, à gérer la réception et l'envoi de messages SMS.

Le serveur 2, quant à lui, comprend :
- une première interface de communication 2a avec l'opérateur du réseau GSM 15, cette interface étant du type SMS,
- un serveur d'application 2b relié à l'interface 2a et destiné à traiter les requêtes SMS en provenance du téléphone mobile 1a,
- une première base de données 2c reliée au serveur 2b et contenant d'une part, les formulaires de saisie des caractéristiques d'identification des utilisateurs du système et, d'autre part, les formulaires de description des circonstances de l'accident,
- une seconde interface de communication 2d avec le réseau Internet,
- une seconde base de données 2e qui comprend certaines informations d'identification fournies préalablement par les utilisateurs lors de leur abonnement au serveur (numéro MSISDN, numéro de téléphone mobile, etc...).

Enfin, la plate-forme 3 comprend :
- une première interface de communication 3a avec un réseau de type Internet,
- un serveur d'application 3b relié à l'interface 3a et destiné à traiter les messages en provenance du serveur 2,
- une table de correspondance 3c reliée au serveur d'application 3b et contenant un champ intitulé UTILISATEURS qui est associé à trois champs intitulés respectivement N° MSISDN, N° MOBILE, E-CONSTAT,
- une seconde interface de communication 3d avec l'opérateur du réseau GSM 15, cette interface étant du type SMS et reliée au serveur d'application 3b.

On va maintenant décrire en référence à la figure 1 le procédé de signature conformément à la présente invention.

Suite à un accident de voiture impliquant les utilisateurs A et B, l'un des utilisateurs, par exemple l'utilisateur A, se connecte au serveur 2 au moyen de son téléphone mobile 1a et lui adresse un message SMS m1 intitulé par exemple "accident".

Le message m1 est reçu sur l'interface SMS 2a, après avoir transité par la centrale 15a, puis relayé vers le serveur d'application 2b. Ce dernier extrait alors de la base de données 2c un formulaire de saisie des caractéristiques d'identification des utilisateurs, lequel est envoyé vers le téléphone mobile 1 a de l'utilisateur A, via la réseau GSM 15, sous la forme d'un message SMS m2 intitulé par exemple "formulaire identification".

L'interface de communication 13a de la carte SIM 7a reçoit le message m2 et l'utilisateur A est averti de la réception de ce message par un avis de réception qui se présente par exemple sous la forme d'une icône qui s'affiche sur l'écran 9a de son téléphone 1a. L'utilisateur A remplit les rubriques dudit formulaire à l'aide du clavier 8a. De telles rubriques concernent notamment les coordonnées des sociétés d'assurances de chaque utilisateur, leurs numéros de carte verte respectifs, leurs numéros de téléphone mobile respectifs, etc...

Une fois que les rubriques ont été complétées, l'utilisateur A envoie le formulaire complété au serveur 2 sous forme d'un message SMS m3 intitulé par exemple " formulaire utilisateur rempli ".

Le message m3 est reçu sur l'interface SMS 2a puis relayé vers le serveur d'application 2b qui extrait les données du formulaire et retransmet ces dernières dans la base de données 2e, en correspondance avec les informations d'identification relatives d'une part à l'utilisateur A, et, d'autre part, à l'utilisateur B.

Afin d'éviter à l'utilisateur A une saisie fastidieuse de certaines informations du type nom des utilisateurs A, B, date de naissance, numéros d'immatriculation des véhicules en cause, numéro et date des permis de conduire, etc..., l'interface 2d du serveur 2 envoie deux requêtes de complément d'informations m4a, m4b respectivement auprès des serveurs d'assurance 4a, 4b.

Les deux requêtes sont reçues respectivement sur les interfaces 4₁a et 4₁b, puis relayés vers les serveurs d'application 4₂a, 4₂b. Ces derniers extraient respectivement des bases de données 4₃a, 4₃b les informations demandées et les envoient respectivement sur les interfaces 4₁a, 4₁b. Les interfaces 4₁a, 4₁b émettent alors en réponse au serveur 2 des messages respectifs m5a, m5b qui contiennent les informations demandées.

Dès réception des messages m5a et m5b, l'interface de communication 2d les transmet pour téléchargement vers la base de données 2e en correspondance avec les informations d'identification relatives d'une part à l'utilisateur A, et, d'autre part, à l'utilisateur B.

A la suite de cette étape, le serveur d'application 2b extrait de la base de données 2c un formulaire de saisie de description des circonstances de l'accident, lequel est envoyé vers le téléphone mobile 1a de l'utilisateur A, via la réseau GSM 15, sous la forme d'un message SMS m6 intitulé par exemple "formulaire accident".

L'interface de communication 13a de la carte SIM 7a reçoit le message m6 et l'utilisateur A est averti de la réception de ce message par un avis de réception qui se présente par exemple sous la forme d'une icône qui s'affiche sur l'écran 9a de son téléphone mobile 1a.

Ce message m6 contient une liste déroulante de questions et de propositions de schémas type concernant l'accident, lesquelles sont en fait reprises de la rubrique 12 de la version papier du Constat Européen d'Accident. L'utilisateur A répond aux questions dudit formulaire à l'aide du clavier 9a de son téléphone mobile 1a.

Une fois ledit formulaire complété, l'utilisateur A l'envoie au serveur 2 sous forme d'un message SMS m7 intitulé par exemple "formulaire accident rempli".

Le message m7 est reçu sur l'interface SMS 2a puis relayé vers le serveur d'application 2b qui extrait les données du formulaire et retransmet ces dernières dans la base de données 2e, en correspondance avec les informations d'identification relatives d'une part à l'utilisateur A, et, d'autre part, à l'utilisateur B.

A la suite de cette étape, le serveur d'application 2b extrait de la base de données 2e les données recueillies dans les messages m2, m5a, m5b et m7, puis formate l'ensemble de ces données en un formulaire électronique de constat européen d'accident, au moyen d'un programme préalablement enregistré.

Le serveur 2b transmet à l'interface de communication 2d ledit formulaire électronique accompagné des numéros MSISDN relatifs aux utilisateurs A et B, et ladite interface émet en direction de l'interface de communication 3a de la plate-forme 3 un message m8 contenant ces informations.

Le message m8 est reçu sur l'interface 3a puis relayé vers le serveur d'application 3b qui extrait les données du formulaire et retransmet ces dernières dans la table de correspondance 3c, dans le champ E-CONSTAT, en association respectivement avec les champs UTILISATEUR A, UTILISATEUR B, grâce à la connaissance, par le serveur 3b, du numéro MSISDN de chaque utilisateur.

A la suite de cette opération le serveur d'application 3b extrait de la table 3c les numéros de téléphone mobile de chaque utilisateur A, B, de même que le formulaire électronique correspondant.

Le serveur d'application 3b adresse ces informations à l'interface SMS 3d. Cette dernière émet alors deux messages SMS m9a et m9b respectivement en direction des téléphones mobiles 1a et 1b, chaque message m9a, m9b regroupant les données contenues dans ledit formulaire électronique.

L'interface de communication 13a (respectivement 13b) de la carte SIM 7a (respectivement 7b) reçoit le message m9a (respectivement m9b) et l'utilisateur A (respectivement B) est averti de la réception de ce message par un avis de réception qui se présente par exemple sous la forme d'une icône qui s'affiche sur l'écran 9a (respectivement 9b) de son téléphone mobile 1a (respectivement 1b).

L'utilisateur A (respectivement B) saisit un code de signature Za respectivement Zb) sur le clavier 9a (respectivement 9b) de son téléphone mobile, Dans un premier temps, la carte SIM 7a (respectivement 7b) soumet le code Za (respectivement Zb) à l'algorithme de chiffrement préalablement enregistré dans la mémoire 12a (respectivement 12b). Dans un deuxième temps, la carte SIM 7a (respectivement 7b) signe un message qui est constitué du message m9a (respectivement m9b) et du chiffré obtenu précédemment, cette signature étant produite à l'aide de la clé privée Sa (respectivement Sb) que la carte SIM possède en mémoire.

L'interface de communication 13a (respectivement 13b) de la carte SIM 7a (respectivement 7b) émet alors en direction de la plate-forme 3 un message SMS m10a (respectivement m10b) qui contient la signature qui vient d'être produite.

L'interface SMS 3d reçoit lesdits messages m10a et m10b et les transmet au serveur d'application 3b qui vérifie la signature au moyen d'un algorithme de vérification et de la clé publique K préalablement enregistrée.

Dans le cas où un certificat de signature a été adjoint à la signature, la plate-forme 3 vérifie ce certificat auprès de l'autorité de confiance 5.

L'interface 3a émet ensuite en direction du serveur 2 un message m11 contenant le formulaire électronique signé par l'utilisateur A et le formulaire électronique signé par l'utilisateur B.

Le message m11 est reçu sur l'interface SMS 2d puis relayé vers le serveur d'application 2b qui fusionne les deux formulaires en un unique formulaire électronique contenant à la fois la signature des utilisateurs A et B.

Le serveur d'application 2b transmet ce formulaire électronique à l'interface 2d qui émet alors deux messages SMS m12a et m12b respectivement en direction des serveurs d'assurance 4a et 4b, chaque message m12a, m12b regroupant les données contenues dans ledit formulaire électronique signé par chaque utilisateur.

Les messages m12a, m12b sont reçus respectivement sur les interfaces 4₁a, 4₁b puis relayés vers les serveurs 4₂a, 4₂b qui extraient les données de ces messages afin de déterminer la responsabilité des utilisateurs A et B dans l'accident en cause et d'engager le règlement des sinistres.

Il va de soi que le mode de réalisation et les variantes qui ont été décrits ci-dessus ont été données à titre purement indicatif et nullement limitatif, et que de nombreuses modifications peuvent être facilement apportées par l'homme de l'art sans pour autant sortir du cadre de l'invention.

On pourrait par exemple remplacer le serveur 2 et les serveurs d'assurance 4a, 4b de la figure 1 par un unique serveur qui regrouperait les fonctions du serveur 2 et des serveurs 4a, 4b.

Par ailleurs, afin de permettre une sécurité accrue dans les échanges, il est possible de sécuriser les communications de données entre, d'une part, le serveur 2 et, d'autre part, la plate-forme 3 et les serveurs d'assurance 4a, 4b.

## Revendications

1. Procédé de signature électronique de document depuis au moins un premier terminal mobile (1a), comprenant les étapes suivantes:
- a) connexion du premier terminal (1 a) auprès d'un serveur (2) d'établissement de document électronique,
- b) envoi (m2, m6) par le serveur (2) à ce terminal (1a) d'une requête de saisie de données qui sont relatives, d'une part, à l'identification de l'utilisateur du premier terminal, et, d'autre part, à un événement lié au moins à cet utilisateur,
- c) saisie desdites données sur le premier terminal (1a) et envoi (m3, m7) desdites données vers le serveur (2),
- d) établissement d'un document électronique à partir des données reçues et envoi (m8) par le serveur (2) à des moyens de gestion de signature électronique (3) dudit document établi, accompagné d'un numéro d'identification du premier terminal (1a),
- e) envoi (m9a) par les moyens de gestion de signature électronique (3) au premier terminal (1a) dudit document établi reçu, accompagné d'une requête de signature dudit document,
- f) calcul d'une signature électronique par le premier terminal (1a) en réponse à ladite requête et envoi (m10a) du document signé aux moyens de gestion de signature électronique (3),
- g) vérification, par lesdits moyens de gestion de signature électronique (3), de la signature associée au document signé reçu.

2. Procédé selon la revendication 1, dans lequel lorsqu'un second terminal mobile (1 b) est impliqué :
- à l'étape b) les données envoyées vers le premier terminal (1a) sont relatives, d'une part, à l'identification des utilisateurs de chacun des premier (1a) et second (1b) terminaux, et, d'autre part, à un événement liant ces utilisateurs,
- à l'étape d) le document électronique établi qui est envoyé vers les moyens de gestion de signature électronique (3) est accompagné d'un numéro d'identification pour chacun des premier et second terminaux,
- à l'étape e) le document établi reçu est envoyé vers les premier et second terminaux, en étant accompagné d'une requête de signature dudit document,
- à l'étape f), la signature électronique est effectuée par chacun des premier et second terminaux en réponse à ladite requête et le document signé est envoyé par chacun des premier et second terminaux aux moyens de gestion de signature électronique (3),
- à l'étape g), la signature vérifiée est associée à chaque document signé reçu.

3. Procédé selon la revendication 1 ou 2, dans lequel l'étape b) comprend l'envoi d'une requête (m4a;m4b) par le serveur d'établissement de document électronique (2) à des moyens de gestion de données d'identification (4a;4b), afin de recevoir des données complémentaires relatives à l'identification du ou des utilisateurs.

4. Procédé selon les revendications 2 et 3, comprenant, à la suite de l'étape g), les étapes suivantes:
- h) envoi (m11), par les moyens de gestion de signature électronique (3), au serveur (2), de chacun des documents signés reçus,
- i) fusion, dans le serveur (2), des documents signés reçus, en un unique document signé,
- j) envoi (m12a, m12b), par le serveur (2), aux moyens de gestion de données d'identification (4a;4b), dudit unique document signé.

5. Terminal mobile appartenant à un utilisateur impliqué dans un événement, ledit terminal comprenant :
- des moyens de connexion auprès d'un serveur (2) d'établissement de document électronique,
- des moyens (13a;13b) de réception de données pour recevoir, en provenance du serveur (2), une requête de saisie de données qui sont relatives, d'une part, à l'identification de l'utilisateur, et, d'autre part, à un événement lié au moins à cet utilisateur,
- des moyens (8a;8b) de saisie de données qui sont relatives, d'une part, à l'identification dudit utilisateur, et, d'autre part, audit événement,
- des moyens (13a;13b) de réception de données pour recevoir, en provenance de moyens de gestion de signature électronique (3), un document électronique accompagné d'une requête de signature dudit document, ledit document électronique étant établi sur la base desdites données qui sont relatives, d'une part, à l'identification dudit utilisateur, et, d'autre part, audit événement,
- et des moyens (7a;7b) de calcul de signature électronique pour signer ledit document électronique reçu.

6. Terminal mobile selon la revendication 5, dans lequel lesdits moyens (7a; 7b) de calcul de signature électronique sont contenus dans un module électronique d'authentification dudit terminal.

7. Serveur d'établissement de document électronique (2) comprenant :
- des moyens (2a) d'émission de données pour envoyer, en direction d'un terminal mobile (1a) appartenant à un utilisateur impliqué dans un événement, une requête de saisie de données qui sont relatives, d'une part, à l'identification dudit utilisateur, et, d'autre part, audit événement,
- des moyens (2b) d'établissement de document électronique à partir des données reçues en provenance dudit terminal mobile,
- et des moyens (2a) d'émission de données pour envoyer, à des moyens de gestion de signature électronique (3), ledit document établi.

8. Serveur selon la revendication 7, comprenant en outre une base de données (2c) qui contient d'une part, un formulaire de saisie des caractéristiques d'identification dudit utilisateur et, d'autre part, un formulaire de description des circonstances dans lequel s'est produit ledit événement.

9. Système de signature électronique de document, ledit système comprenant:
- au moins un premier terminal mobile (1a) qui comprend des moyens d'envoi/réception de données (13a), des moyens d'affichage (9a), des moyens de saisie de données (8a) qui sont relatives, d'une part, à l'identification de l'utilisateur du premier terminal, et, d'autre part, à un événement lié au moins à cet utilisateur, et des moyens de calcul de signature électronique (7a),
- un serveur d'établissement de document électronique (2) qui comprend des moyens d'envoi/réception de données (2a) pour envoyer audit premier terminal une requête de saisie de données qui sont relatives, d'une part, à l'identification de l'utilisateur du premier terminal, et, d'autre part, à un événement lié au moins à cet utilisateur, et des moyens (2b) d'établissement de document électronique à partir des données reçues,
- des moyens de gestion de signature électronique (3) comprenant des moyens d'envoi/réception de données (3a, 3d) qui sont destinés :
• à recevoir, en provenance du serveur d'établissement de document électronique (2), ledit document établi, accompagné d'un numéro d'identification du premier terminal,
• à envoyer au premier terminal ledit document établi reçu, accompagné d'une requête de signature dudit document,
• à recevoir le document signé en provenance dudit premier terminal, et des moyens de vérification (3b) pour vérifier la signature associée au document signé reçu.

10. Système de signature électronique de document, ledit système comprenant :
- des premier (1a) et second terminaux mobiles (1b) qui comprennent chacun des moyens d'envoi/réception de données (2a, 2b), des moyens d'affichage (9a, 9b), des moyens de saisie de données (8a, 8b) et des moyens de calcul de signature électronique (7a, 7b), les moyens de saisie de données du premier terminal étant destinés à saisir des données qui sont relatives, d'une part, à l'identification des utilisateurs de chacun des premier et second terminaux, et, d'autre part, à un événement liant ces utilisateurs,
- un serveur d'établissement de document électronique (2) qui comprend des moyens d'envoi/réception de données (2a, 2d) pour envoyer audit premier terminal (1a) une requête de saisie de données qui sont relatives, d'une part, à l'identification des utilisateurs de chacun des premier et second terminaux, et, d'autre part, à un événement liant ces utilisateurs, et des moyens (2b) d'établissement de document électronique à partir des données reçues,
- des moyens de gestion de signature électronique (3) comprenant des moyens d'envoi/réception de données (3a, 3d) qui sont destinés :
• à recevoir, en provenance du serveur d'établissement de document électronique (2), ledit document établi, accompagné d'un numéro d'identification pour chacun des premier (1 a) et second (1 b) terminaux,
• à envoyer aux premier et second terminaux ledit document établi reçu, accompagné d'une requête de signature dudit document,
• à recevoir le document signé en provenance des premier et second terminaux,
et des moyens de vérification (3b) pour vérifier la signature associée à chaque document signé reçu.

11. Système selon la revendication 9 ou 10, comprenant en outre des moyens de gestion de données d'identification (4a, 4b) qui comprennent :
- des moyens d'émission/réception de données (4₁a, 4₁b) pour, d'une part, envoyer au serveur d'établissement de document électronique (2) des données complémentaires relatives à l'identification du ou des utilisateurs, et, d'autre part, recevoir, en provenance des moyens de gestion de signature électronique (3), le document signé reçu,
- des moyens de traitement (4₂a, 4₂b) du document signé reçu qui sont reliés aux moyens d'émission/réception,
- et des moyens (4₃a, 4₃b) de stockage de données d'identification du ou des utilisateurs qui sont reliés auxdits moyens de traitement.

12. Système selon l'une quelconque des revendications 9 à 11, dans lequel les premier et second terminaux mobiles sont des téléphones, leurs moyens de calcul de signature électronique respectifs étant contenus dans un module électronique d'authentification (7a, 7b).

## Claims

1. A method of electronically signing a document from a first mobile terminal (1a), the method comprising the following steps:
- a) connecting the first terminal (1a) to a server (2) adapted to draw up an electronic document;
- b) the server (2) sending (m2, m6) the terminal (1a) a request for entry of data relating firstly to the identification of the user of the first terminal and secondly to an event linked at least to that user;
- c) entering said data on the first terminal (1a) and sending (m3, m7) said data to the server (2);
- d) the server (2) drawing up an electronic document from the data received and sending (m8) the drawn up document to electronic signature management means (3) accompanied by an identification number of the first terminal (1 a);
- e) the electronic signature management means (3) sending (m9a) the received drawn up document to the first terminal (1a), accompanied by a request to sign said document;
- f) the first terminal (1a) computing an electronic signature in response to said request and sending (m10a) the signed document to the electronic signature management means (3); and
- g) said electronic signature management means (3) verifying the signature associated with the signed document received.

2. A method according to claim 1, wherein, when a second mobile terminal (1 b) is involved:
- in step b), the data sent to the first terminal (1 a) relates firstly to the identification of the users of each of the first terminal (1 a) and the second terminal (1b) and secondly to an event linking those users;
- in step d), the drawn up electronic document that is sent to the electronic signature management means (3) is accompanied by an identification number for each of the first and second terminals;
- in step e), the drawn up document received is sent to the first and second terminals accompanied by a request to sign said document;
- in step f), the electronic signature is effected by each of the first and second terminals in response to said request and the signed document is sent by each of the first and second terminals to the electronic signature management means (3); and
- in step g), the verified signature is associated with each signed document received.

3. A method according to claim 1 or claim 2, wherein step b) includes the server (2) adapted to draw up an electronic document sending (m4a; m4b) a request to identification data management means (4a; 4b) in order to receive complementary data relating to the identification of the user(s).

4. A method according to claims 2 and 3, including, after step g), the following steps:
- h) the electronic signature management means (3) sending (m11) the server (2) each of the signed documents received;
- i) merging of the signed documents received into a single signed document in the server (2); and
- j) the server (2) sending (m12a; m12b) said single signed document to the identification management means (4a; 4b).

5. A mobile terminal belonging to a user involved in an event, said terminal comprising:
- means for connecting to a server (2) adapted to draw up an electronic document;
- data receiving means (13a; 13b) for receiving from the server (2) a request for entry of data relating firstly to the identification of the user and secondly to an event linked at least to that user;
- means (8a; 8b) for entering data relating firstly to the identification of said user and secondly to said event;
- data receiving means (13a; 13b) for receiving from electronic signature management means (3) an electronic document accompanied by a request to sign said document, said electronic document being drawn up on the basis of said data that relates firstly to the identification of said user and secondly to said event; and
- electronic signature computation means (7a; 7b) for signing said electronic document received.

6. A mobile terminal according to claim 5, wherein said electronic signature computation means (7a; 7b) are included in an authentication electronic module of said terminal.

7. A server (2) for drawing up electronic documents,comprising:
- data sending means (2a) for sending to a mobile terminal (1 a) belonging to a user involved in an event a request for entry of data relating firstly to the identification of said user and secondly to said event;
- means (2b) for drawing up electronic documents from data received from said mobile terminal; and
- data sending means (2a) for sending the drawn up document to electronic signature management means.

8. A server according to claim 7, further comprising a database (2c) that contains firstly a form for entry of identification characteristics of said user and secondly a form for describing the circumstances in which said event occurred.

9. A system for electronically signing documents, said system comprising:
- a first mobile terminal (1a) that includes data send/receive means (13a), display means (9a), means (8a) for entry of data relating firstly to the identification of the user of the first terminal and secondly to an event linked at least to that user, and electronic signature computation means (7a);
- a server (2) that is adapted to draw up an electronic document and includes data send/receive means (2a) for sending to said first terminal a request for entry of data relating firstly to the identification of the user of the first terminal and secondly to an event linked at least to that user and means (2b) for drawing up electronic documents from received data;
- electronic signature management means (3) including data send/receive means (3a; 3d) adapted:
• to receive from said server (2) that is adapted to draw up an electronic document said drawn up document accompanied by an identification number of the first terminal;
• to send said drawn up document received to the first terminal accompanied by a request to sign said document; and
• to receive the signed document from said first terminal; and
- verification means (3b) for verifying the signature associated with the signed document received.

10. A electronic document signing system comprising:
- a first mobile terminal (1a) and a second mobile terminal (1b) each of which includes data send/receive means (2a; 2b), display means (9a; 9b), data entry means (8a; 8b), and electronic signature computation means (7a; 7b), the data entry means of the first terminal being adapted to enter data relating firstly to the identification of the users of each of the first and second terminals and secondly to an event linking those users,
- a server (2) that is adapted to draw up an electronic document and includes data send/receive means (2a; 2d) for sending to said first terminal (1a) a request for entry of data relating firstly to the identification of the users of each of the first and second terminals and secondly to an event linking those users and means (2b) for drawing up electronic documents from received data;
- electronic signature management means (3) including data send/receive means (3a; 3d) that are adapted:
• to receive said drawn up document from the server (2) that is adapted to draw up an electronic document with an identification number for each of the first terminal (1 a) and the second terminal (1 b);
• sending said drawn up document received to the first and second terminals accompanied by a request to sign said document; and
• to receive the signed document from the first and second terminals; and
- verification means (3b) for verifying the signature associated with each signed document received.

11. A system according to claim 9 or claim 10, further comprising identification data management means (4a; 4b) that include:
- data send/receive means (4₁a; 4₁b) for firstly sending the server (2) that is adapted to draw up an electronic document complementary data relating to the identification of the user(s) and secondly receiving from the electronic signature management means (3) the signed document;
- means (4₂a; 4₂b) for processing the signed document received connected to the send/receive means; and
- means (4₃a; 4₃b) connected to said processing means for storing data identifying the user(s).

12. System according to any one of claims 9 to 11, wherein the first and second mobile terminals are telephones, their respective electronic signature computation means being included in an authentication electronic module (7a; 7b).

## Patentansprüche

1. Verfahren zur elektronischen Dokumentensignatur von mindestens einem mobilen Terminal (1a), das die folgenden Phasen beinhaltet:
- a) Verbindung des ersten Terminals (1a) mit einem Server (2) zur Erstellung elektronischer Dokumente,
- b) Versand (m2, m6) einer Anfrage nach Eingabe von Daten, die sich einerseits auf die Identifizierung des Nutzers des ersten Terminals und andererseits auf ein Ereignis beziehen, das zumindest mit diesem Nutzer verbunden ist vom Server (2) an diesen Terminal (1a),
- c) Eingabe der genannten Daten in den ersten Terminal (1a) und Versand (m3, m7) der genannten Daten an den Server (2),
- d) Erstellung eines elektronischen Dokuments auf der Grundlage der empfangenen Daten und Versand (m8) des genannten erstellten Dokuments mit einer Identifizierungsnummer des ersten Terminals (1a) vom Server (2) an Mittel zur Verwaltung elektronischer Signaturen (3),
- e) Versand (m9a) des genannten erstellten empfangenen Dokuments zusammen mit dem Ersuchen, das genannte Dokument zu signieren, durch die Mittel zur Verwaltung elektronischer Signaturen (3) an den ersten Terminal (1a)
- f) Errechnung einer elektronischen Signatur durch den ersten Terminal (1a) in Antwort auf das genannte Ersuchen und Versand (m10a) des signierten Dokuments an die Mittel zur Verwaltung elektronischer Signaturen (3),
- g) Überprüfung der Signatur, die mit dem signierten empfangenen Dokument verknüpft ist durch die vorerwähnten Mittel zur Verwaltung elektronischer Signaturen (3).

2. Verfahren nach Anspruch 1, in das ein zweiter mobiler Terminal (1b) einbezogen ist:
- in Phase b) betreffen die Daten, die zum ersten Terminal (1a) gesandt werden, einerseits die Identifizierung der Nutzer des ersten (1a) und zweiten (1b) Terminals und andererseits ein Ereignis, das diese Nutzer verbindet,
- in Phase d) wird das erstellte elektronische Dokument, das an die Mittel zur Verwaltung elektronischer Signaturen (3) versandt wird, mit jeweils einer Identifikationsnummer für den ersten und den zweiten Terminal versandt,
- in Phase e) wird das erstellte empfangene Dokument an den ersten und den zweiten Terminal versandt, wobei es von einem Ersuchen, das genannte Dokument zu signieren, begleitet wird,
- in Phase f) führen der erste und der zweite Terminal in Antwort auf das genannte Ersuchen jeweils die Signatur durch und das signierte Dokument wird von dem ersten und dem zweiten Terminal an die Mittel zur Verwaltung elektronischer Signaturen (3) versandt,
- in Phase g) wird die überprüfte Signatur mit jedem empfangenen signierten Dokument verknüpft.

3. Verfahren nach einem der Ansprüche 1 oder 2, in dem Phase b) den Versand eines Ersuchens (m4a;m4b) des Servers, der das elektronische Dokument erstellt (2), an Mittel zur Verwaltung von Identifikationsdaten (4a;4b) umfasst, zusätzliche Daten über die Identifizierung des oder der Nutzer zu erhalten.

4. Verfahren nach Anspruch 2 und 3, das nach Phase g) die folgenden Phasen beinhaltet:
- h) Versand (m11) jedes der empfangenen signierten Dokumente durch Mittel zur Verwaltung elektronischer Signaturen (3) an den Server (2),
- i) Fusion der empfangenen signierten Dokumente zu einem einzigen signierten Dokument im Server (2),
- j) Versand (m12a, m12b) des vorerwähnten einzigen signierten Dokuments vom Server (2) an die Mittel zur Verwaltung der Identifikationsdaten (4a;4b).

5. Mobiler Terminal, der einem an einem Ereignis beteiligten Nutzer gehört, wobei dieser Terminal umfasst:
- Mittel zur Verbindung mit einem Server (2) zur Erstellung elektronischer Dokumente,
- Mittel (13a;13b) zum Datenempfang, um von dem Server (2) ein Ersuchen zur Eingaben von Daten zu erhalten, die sich einerseits auf die Identifizierung des Nutzers und andererseits auf ein Ereignis beziehen, das zumindest mit diesem Nutzer in Verbindung steht,
- Mittel (8a;8b) zur Eingabe von Daten, die sich einerseits auf die Identifizierung des genannten Nutzers und andererseits auf das genannte Ereignis beziehen.
- Mittel (13a;13b) zum Datenempfang, um von den Mitteln zur Verwaltung der elektronischen Signatur (3) ein elektronisches Dokument zusammen mit einem Ersuchen um Signatur des genannten Dokuments zu erhalten, wobei das genannte elektronische Dokument auf der Grundlage der genannten Daten erstellt ist, die sich einerseits auf die Identifizierung des genannten Nutzers und andererseits auf das genannte Ereignis beziehen;
- Und Mittel (7a;7b) zur Berechnung der elektronischen Signatur, um das genannte empfangene Dokument zu signieren.

6. Mobiler Terminal nach Anspruch 5, bei dem die genannten Mittel (7a;7b) zur Errechnung der elektronischen Signatur in einem elektronischen Modul zur Benutzerkennung des genannten Terminals enthalten sind.

7. Server zur Erstellung elektronischer Dokumente (2), der beinhaltet:
- Mittel (2a) zur Ausgabe von Daten, um an einen mobilen Terminal (1a), der einem an einem Ereignis beteiligten Nutzer gehört, ein Ersuchen um Eingaben von Daten zu senden, die sich einerseits auf die Identifizierung des genannten Nutzers und andererseits auf das genannte Ereignis beziehen,
- Mittel (2b) zur Erstellung eines elektronischen Dokuments auf der Grundlage von Daten, die ausgehend von dem genannten mobilen Terminal empfangen wurden,
- Und Mittel (2a) zur Ausgabe von Daten, um das genannte erstellte Dokument an Mittel zur Verwaltung elektronischer Signaturen (3) zu senden.

8. Server nach Anspruch 7, der außerdem eine Datenbank (2c) beinhaltet, die einerseits ein Formular zur Erfassung von Identifikationsmerkmalen des erwähnten Nutzers und andererseits ein Formular zur Beschreibung der Umstände enthält, unter denen das genannte Ereignis eingetreten ist.

9. System zur elektronischen Signatur von Dokumenten, das umfasst:
- mindestens einen ersten mobilen Terminal (1a), der Mittel zum Versand/Empfang von Daten (13a), Mittel zur Anzeige (9a), Mittel zur Eingabe von Daten (8a), die sich einerseits auf die Identifizierung des Nutzers des ersten Terminals und andererseits auf ein Ereignis beziehen, das zumindest mit diesem Nutzer verbunden ist und Mittel zur Errechnung der elektronischen Signatur (7a) umfasst,
- einen Server zur Erstellung elektronischer Dokumente (2) der Mittel zum Versand/Empfang von Daten (2a) umfasst, um dem genannten ersten Terminal ein Ersuchen um Eingabe von Daten zu senden, die sich einerseits auf die Identifizierung des Nutzers des ersten Terminals und andererseits auf ein Ereignis beziehen, das zumindest mit diesem Nutzer in Verbindung steht und Mittel (2b) zur Erstellung eines elektronischen Dokuments mit Ausgangspunkt in den erhaltenen Daten,
- Mittel zur Verwaltung einer elektronischen Signatur (3), die Mittel zum Versand/Empfang von Daten (3a, 3d) umfassen, die dazu bestimmt sind:
o Von einem Server zur Erstellung elektronischer Dokumente (2) das genannte erstellte Dokument zusammen mit einer Identifizierungsnummer des ersten Terminals zu empfangen,
o Dem ersten Terminal das genannte erstellte, empfangene Dokument zusammen mit einem Ersuchen um Signatur des genannten Dokuments zuzustellen,
o Das signierte Dokument von dem genannten ersten Terminal zu empfangen, und Mittel zur Überprüfung (3b), um die mit dem empfangenen signierten Dokument verknüpfte Signatur zu überprüfen.

10. System zur elektronischen Signatur eines Dokuments, wobei das System umfasst:
- erste (1a) und zweite mobile Terminals (1b), die jeweils Mittel zum Versand/Empfang von Daten (2a, 2b), Mittel zur Anzeige (9a, 9b), Mittel zur Datenerfassung (8a, 8b) und Mittel zur Berechnung einer elektronischen Signatur (7a, 7b) beinhalten, wobei die Mittel zur Datenerfassung des ersten Terminals dazu bestimmt sind, einerseits Daten zur Identifikation der Nutzer des ersten und des zweiten Terminals und andererseits Daten zu einem Ereignis zu erfassen, das diese Nutzer verbindet,
- einen Server zur Erstellung eines elektronischen Dokuments (2), der Mittel zum Versand/Empfang von Daten (2a, 2d) umfasst, um dem genannten ersten Terminal (1a) ein Ersuchen zur Eingabe von Daten zu senden, die sich einerseits auf die Identifizierung der Nutzer des ersten und des zweiten Terminals beziehen und andererseits auf ein Ereignis, das diese Nutzer verbindet und Mittel (2b) zur Erstellung eines elektronischen Dokuments auf der Grundlage der empfangenen Daten,
- Mittel zur Verwaltung einer elektronischen Signatur (3), die Mittel zum Empfang/Versand von Daten (3a, 3d) umfassen, die dazu bestimmt sind:
o Von einem Server zur Erstellung eines elektronischen Dokuments (2) das genannte erstellte Dokument zusammen mit einer Identifikationsnummer für den ersten (1a) und den zweiten (1b) Terminal zu empfangen
o Dem ersten und dem zweiten Terminal das genannte erstellte empfangene Dokument zusammen mit einem Ersuchen um Signatur des genannten Dokuments zuzustellen,
o Das signierte Dokument von dem ersten und dem zweiten Terminal zu empfangen
und Mittel zur Überprüfung (3b), um die mit jedem empfangenen signierten Dokument verknüpfte Signatur zu überprüfen.

11. System nach einem der Ansprüche 9 oder 10, das außerdem Mittel zur Verwaltung von Identifikationsdaten (4a, 4b) beinhaltet, die umfassen:
- Mittel zum Versand/Empfang von Daten (4₁a, 4₁b), um einerseits dem Server zur Erstellung eines elektronischen Dokuments (2) zusätzliche Daten in Bezug auf die Identifikation des oder der Nutzer zu senden und andererseits von den Mitteln zur Verwaltung der elektronischen Signatur (3) das empfangene signierte Dokument zu empfangen,
- Mittel zur Bearbeitung (4₂a, 4₂b) des empfangenen signierten Dokuments, die mit den Mitteln zum Versand/Empfang verbunden sind
- Und Mittel (4₃a, 4₃b) zur Speicherung der Identifikationsdaten des oder der Nutzer, die mit den genannten Bearbeitungsmitteln verbunden sind.

12. System nach einem der Ansprüche 9 bis 11, wobei dem es sich bei dem ersten und dem zweiten mobilen Terminal um Telefone handelt, deren jeweilige Mittel zur Errechnung der elektronischen Signatur in einem elektronischen Modul zur Benutzerkennung (7a, 7b) enthalten sind.
